# EUROPEAN PATENT SPECIFICATION

(11) **EP 2 983 809 B1**
(45) Date of publication and mention of the grant of the patent: **02.05.2018**
(21) Application number: 14716645.8
(22) Date of filing: 24.03.2014
(51) Int. Cl.: B01F 3/04, B01F 5/04, F01N 3/20, F01N 3/28

(54) **REDUCTANT INJECTION IN AN EXHAUST SYSTEM**
REDUKTIONSMITTELINJEKTION IN EINEM ABGASSYSTEM
INJECTION D'AGENT RÉDUCTEUR DANS UN SYSTÈME D'ÉCHAPPEMENT

(30) Priority: 12.04.2013 GB 201306688
(43) Date of publication of application: 17.02.2016
(73) Proprietor: Eminox Limited, The Old Court House Gainsborough DN21 2BE (GB); Liebherr Machines Bulle SA, 1630 Bulle (CH)
(72) Inventor: ARROWSMITH, Duncan J, Newark Nottinghamshire NG24 2FZ (GB); SIMÓN DAVILA,Diego, Gainsborough Lincolnshire DN21 2TU (GB); BATES, Brian G, Lincoln Lincolnshire LN2 2GB (GB); BELLE, Nicolas, 1669 Les Sciernes d'Albeuve (CH); TALAVERA, Nicolas, 1627 Vaulruz (CH); VONARB, Regis, 1635 La Tour de Trême (CH)
(74) Representative: Laufhütte, Dieter
(86) International application number: PCT/IB2014/060095
(87) International publication number: WO 2014/167443

(56) References cited:
- EP-A2- 2 465 602
- US-A1- 2010 212 292
- US-A1- 2012 174 561

## Description

### BACKGROUND

The present invention relates to a system for injecting a fluid reductant into an exhaust system and a method of operating the system.

To reduce NOx levels in exhaust systems, notably diesel exhaust systems, it is known to inject a reductant into the exhaust gas upstream of a Selective Catalytic Reduction (SCR) module. The reductant converts NOx to nitrogen gas and water in the presence of the SCR. Typical reductants used are ammonia or urea, with urea generally preferred for safety and handling reasons. Urea is converted to ammonia through thermal decomposition.

The liquid reductant (for example aqueous urea) may be injected by a liquid-only dosing system, or by means of an air-assisted dosing system. Air-assisted dosing provides a smaller and more uniform droplet size through a centreline injection.

A problem with such reductant injection is that the mist of droplets from the injector tip may deposit on the wall of the exhaust pipe. This reduces the efficiency of the process and, in the case of urea and low-temperature operation, can lead to deposits which partly or completely block the exhaust pipe. A high concentration of droplets on or near the wall presents a significant challenge to mix and give an even distribution of the reductant in the exhaust gas at the SCR catalyst.

It has been proposed in US 2010/0212292, to provide a feed connector through which the reductant is injected and which is provided with an inlet opening for generating additional gas flow along the inner wall of the feed connector to provide a gas barrier for preventing mist droplets from depositing on the inside wall of the feed connector or the exhaust pipe. WO 201 1/106487 discloses a system for injecting a liquid reductant into an exhaust gas via an internal cone disposed in
and generally parallel to the exhaust pipe. A reductant injector is in fluid communication with the cone. The cone has holes to permit inward flow of exhaust gas for creating a drag force on the injected liquid reductant. The drag force is said to increase the travel time of droplets from the injector to the SCR catalytic converter, allowing greater heating and consequently greater evaporation and/or thermal decomposition of the urea or other reductant.

A further system for injecting a fluid reductant into ah exhaust system, in accordance with the preamble of claim 1, is known from EP 2 465 602 B1.

Injecting aqueous urea reductant liquid on a bend in the exhaust pipe has a number of performance and practical benefits, including maximising the downstream mixing length, providing more packaging flexibility and reducing injector temperature issues. However, placing the injector on the bend results in the majority of the spray following the main exhaust flow, particularly if the droplets are fine (as in air-assist injection systems). Even with high initial injection droplet velocity, the droplet inertia is small in comparison to the drag forces exerted by the main exhaust flow. The result of this is that the majority of droplets impinge on the wall of the exhaust pipe, losing any benefits of the small droplets for mixing and breakdown to ammonia (on evaporation and turbulent dispersion).

### SUMMARY OF THE INVENTION

Aspects of the invention are specified in the independent claims. Preferred features are specified in the dependent claims.

### BRIEF DESCRIPTION OF THE DRAWINGS

The invention will now be further described, by way of example only, with reference to the following drawings in which:
Figures 1-3 are perspective views of an assembly for use in an exhaust system in accordance with an aspect of the present invention;
Figure 4 illustrates an exhaust system in accordance with an embodiment of the invention;
Figures 5 and 6 show details of part of the system of Figure 4;
Figure 7 is a vertical sectional view of part of the system of Figure 4; and
Figures 8 and 9 show simulations of gas flow in a system in accordance with an embodiment of the invention.

### DETAILED DESCRIPTION

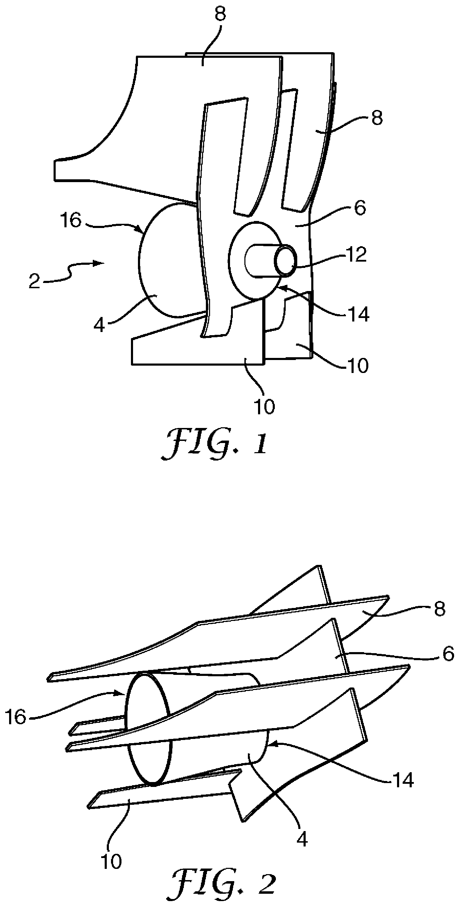

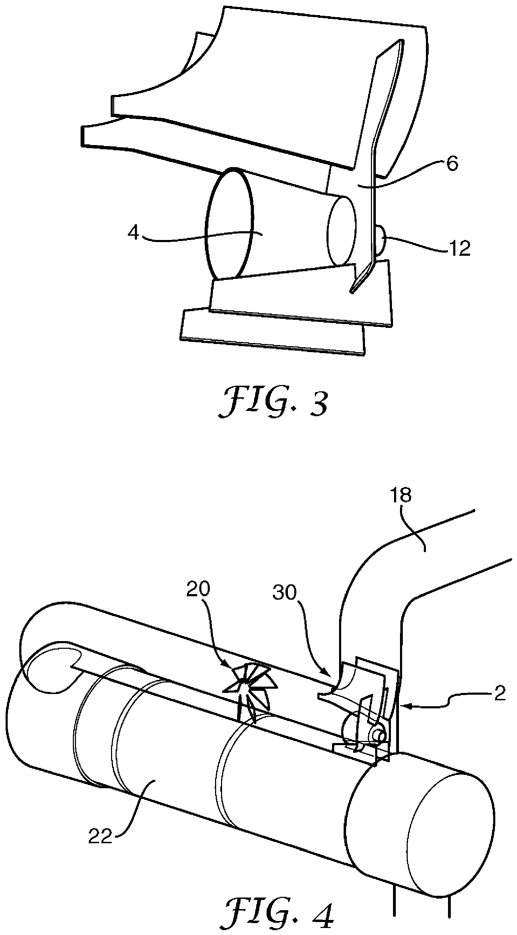

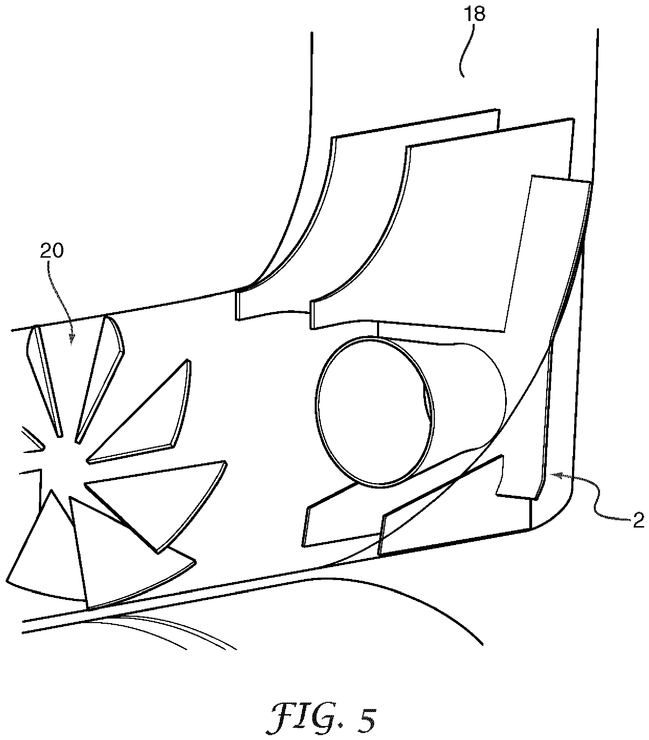

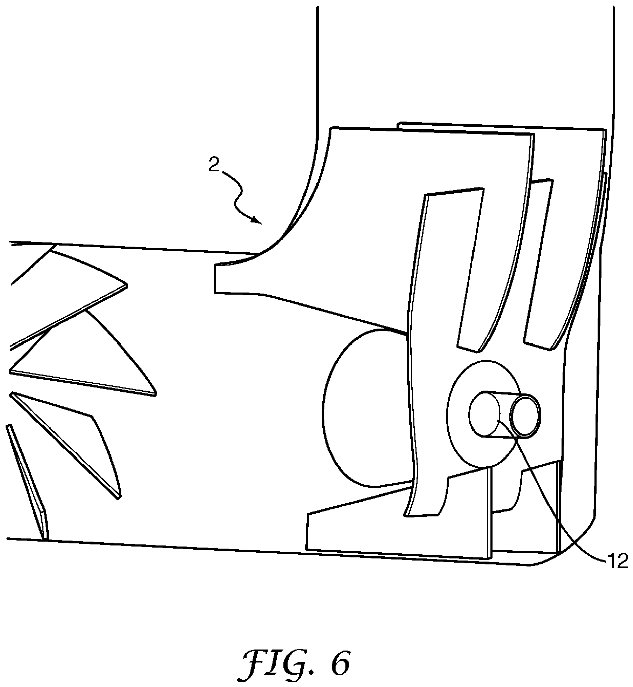

Referring to Figure 4, an engine exhaust system comprises an exhaust pipe 18 having a bend 30 routing an exhaust flow in a curved path. The exhaust pipe 18 has an interior surface and is in fluid communication with an SCR catalytic converter 22 downstream of the bend 30. A flow guide assembly 2 (best shown in Figures 1-3 and 7) is used to inject droplets of a liquid reductant such as aqueous urea into the exhaust gas stream where the droplets are optionally further mixed, in this example by an 8-blade mixer 20 (best shown in Figures 5 and 6).

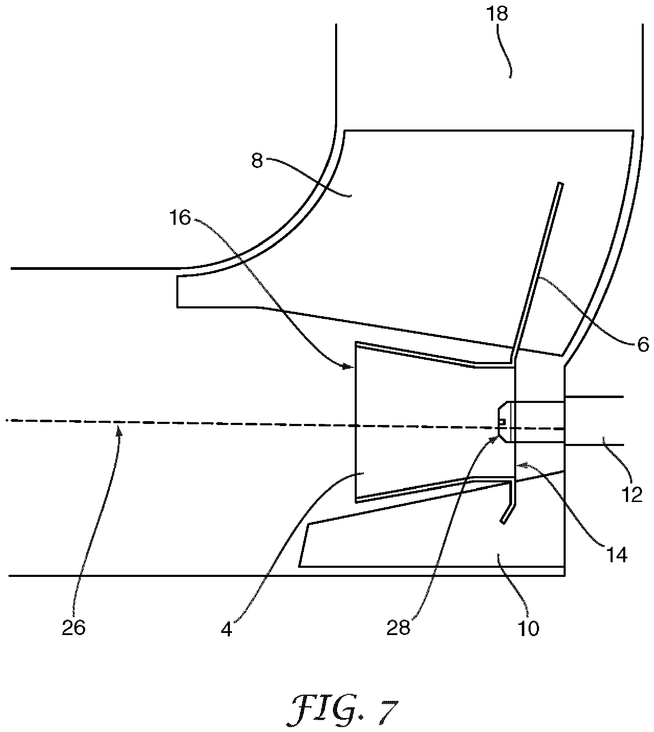

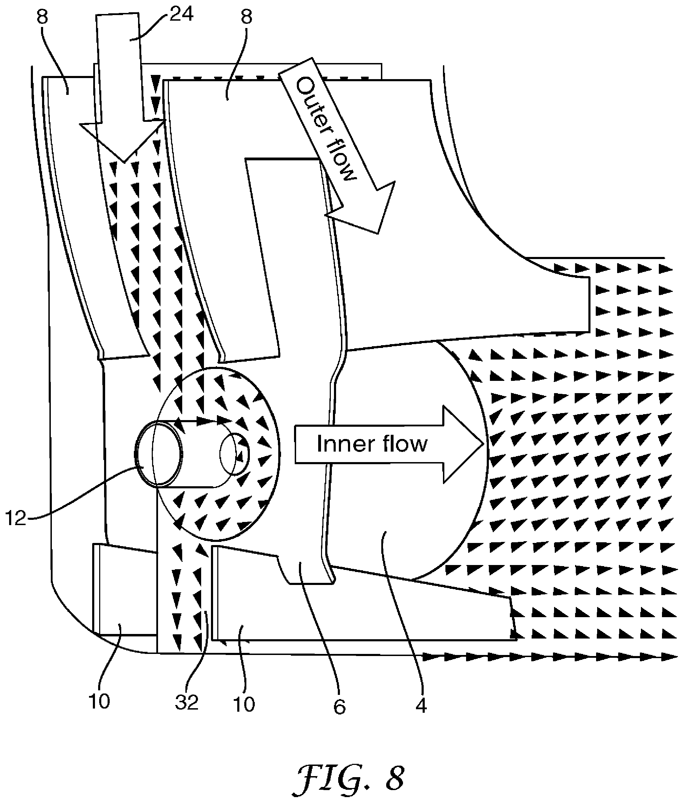

An injector 12 is mounted to the exterior of the exhaust pipe and has an injector tip 28 (Figure 7) which is disposed within the interior of the exhaust pipe 18 at the bend 30, for injecting liquid reductant into the exhaust pipe 18. A shield member 4 is mounted in the exhaust pipe 18 and spaced apart from the interior surface of the exhaust pipe. The shield member 4 is a generally tubular or (in this example) frustoconical structure having an open proximal end 14 and an open distal end 16. The proximal end 14 is disposed such that the injector tip 28 is inside the shield member 4. The distal end 16 is disposed at or towards a centre line 26 of the exhaust pipe 18. A vane 6 is mounted on the shield member 4 and arranged and adapted to direct a proportion of exhaust flow 24 (Figure 8) from upstream of the bend in a substantially arcuate path into the proximal end 14 of the shield member 4.

The injector 12 in this example is an air assisted system, but the invention could also be used with an airless system and may provide an advantage of reduction in the risk of deposits building up on the injector tip 28.

It is preferred that the shield member 4 has a frustoconical shape, with the proximal end 14 being narrower than the distal end 16 so that the diverging internal walls more readily accommodate a diverging droplet spray from the injector tip 28 without the droplets coming into contact with the wall.

The system creates a more uniform flow around the injector 12 by separating a proportion of the exhaust flow and guiding it past the injector in a uniform flow. This process is aided by part of the gas flow being directed behind the shield member 4 and through the space 32 (Figure 8) between the shield member 4 and an adjacent interior surface of the exhaust pipe on a downstream side of the shield member.

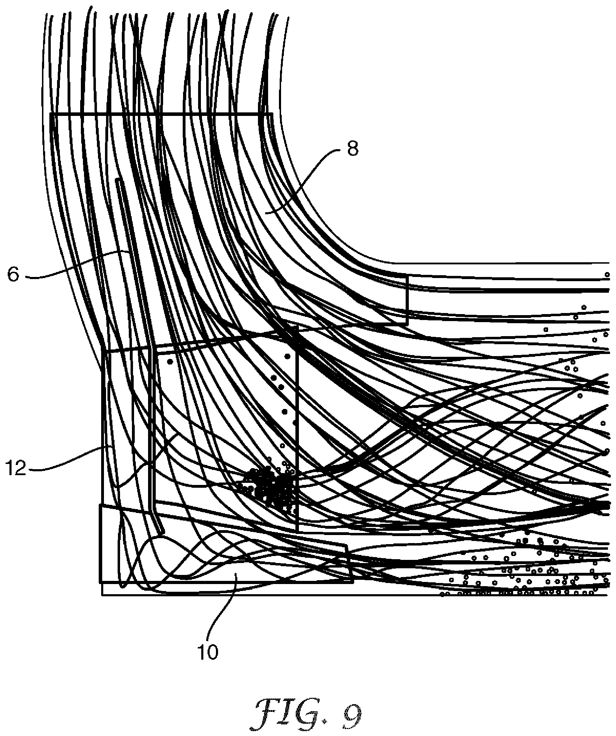

By ensuring that the diverted gas prescribes a path in which there is a smooth transition from the upstream flow, following the path of the bend, into the proximal end 14 of the shield member 4 from behind, most of the momentum of the diverted gas flow is available to provide a cushioning or shielding layer between the central mist of reductant droplets from the injector tip 28 and the interior surface of the shield member 4. The shielded mist of droplets is delivered from the distal end 16 of the shield member 4 to a centre line 26 of the exhaust pipe 18. The droplets are travelling substantially along the centre line 26, helping to reduce the likelihood of their impinging on the internal surface of the exhaust pipe and forming a liquid film. This also provides a good distribution of the droplets within the exhaust gas, reducing the further mixing required to give an even distribution of reductant within the exhaust flow, required for high NOx conversion. A simulation of the smooth transition of the diverted gas is shown in Figure 9 by means of lines denoting gas flow. The diverted gas follows a generally arcuate path behind the vane 6 into the shield member 4 with little loss of momentum.

Diverting some of the gas through the space 32 provides an additional cushion or shielding effect to deter reductant droplets from coming into contact with the downstream internal surface of the exhaust pipe 18 after the exit from the distal end 16 of the shield member 4. By reducing the formation of a liquid film, the risk of deposits and a consequent impact on NOx reduction is reduced.

Where the main exhaust flow (Outer Flow - Figure 8) and the flow from the injector 12 (Inner Flow) combine, the system thus facilitates droplet distribution for further mixing. The main exhaust gas provides an outer flow all around the injector inner flow because of the size of the shield 4 and the space 32 underneath the shield.

The vane 6 may direct 10-30% of gas from the main exhaust stream, preferably about 15%.

In simulations, we have found that the combination of the shield member 4 and vane 6 is sufficient to achieve the benefits of delivery of a greater proportion of reductant droplets to the catalyst 22 if the upstream geometry is such as to provide a smooth gas flow. However, if the upstream geometry is less than ideal, for example if the pipe has one or more bends upstream, the incoming gas flow may have an element of swirl that will tend to reduce the efficiency of the system by bringing reductant into contact with internal surfaces of the exhaust pipe.

To reduce the influence of upstream geometry, one or more flow straightening members 8, 10 may be mounted in relation to the shield member 4. In the present example, a pair of upper flow straightening members 8 is mounted on the vane 6 upstream of the shield member 4 and a pair of lower flow straightening members 10 is mounted on the vane 6 downstream of the shield member 4. In this embodiment, each flow straightening member is a wall or plate mounted on the vane 6 and disposed substantially perpendicularly to a local plane of the vane. Preferably the major planes of the or each flow straightening member are substantially parallel to the internal diameter of the exhaust pipe.

The exhaust system may be manufactured with the flow guide assembly 2 mounted in the exhaust pipe at a bend, and with the injector mounted so that the injector tip is in the shield member. However, it is envisaged that the flow guide assembly could be retrofitted to some exhaust systems to achieve the benefits of the invention.

The invention accordingly provides a system and method for improving the efficiency of delivery of reductant to SCR catalyst in an engine exhaust system.

The articles "a" and "an" are used herein to mean "at least one" unless the context otherwise requires.

## Claims

1. An engine exhaust system comprising:
an exhaust pipe (18) having a bend (30) routing an exhaust flow in a curved path, the exhaust pipe (18) having an interior surface and being in fluid communication with a catalyst (22) downstream of the bend (30);
an injector (12) mounted to the exterior of the exhaust pipe (18) and having an injector tip (28) which is disposed within the interior of the exhaust pipe (18) at the bend (30), for injecting liquid reductant into the exhaust pipe (18);
a shield member (4) mounted in the exhaust pipe (18) and spaced apart from the interior surface of the exhaust pipe (18), the shield member (4) comprising a generally tubular or frustoconical structure having an open proximal end (14) and an open distal end (16); and
a vane (6) mounted in relation to the shield member (4), the vane (6) being arranged and adapted to direct a proportion of exhaust flow (24) from upstream of the bend (30) in a substantially arcuate path into the proximal end (14) of the shield member (4),
**characterized in**
**that** the proximal end (14) is disposed such that the injector tip (28) is inside the shield member (4), the distal end (16) being disposed at or towards a centre line (26) of the exhaust pipe (18).

2. A system according to claim 1, wherein the vane (6) directs part of the exhaust flow through the space between the proximal end (14) of the shield member (4) and the interior surface of the exhaust pipe (18) adjacent to the injector (12), and through the space (32) between the shield member (4) and an adjacent interior surface of the exhaust pipe (18) on a downstream side of the shield member (4).

3. A system according to claim 1 or claim 2, wherein the vane (6) is arranged and adapted to direct 10-30% of the volume of exhaust flow through the shield member (4) and/or the space (32) between the shield member (4) and the adjacent interior surface of the exhaust pipe (18) on a downstream side of the shield member (4).

4. A system according to claim 3, wherein the vane (6) is arranged and adapted to direct 15% of said volume.

5. A system according to any one of the preceding claims, wherein the shield member (4) is disposed such that droplets of reductant liquid will exit the distal end (16) at substantially the centre line (26) of the exhaust pipe (18) having a direction of travel substantially along said centre line (26).

6. A system according to any one of the preceding claims, further comprising at least one flow straightening member (8, 10) mounted in relation to the shield member (4), for reducing swirl in exhaust flow from upstream of the shield member (4).

7. A system according to claim 6, wherein said at least one flow straightening member (8, 10) is a wall or plate mounted on the vane (6) and disposed substantially perpendicularly to a local plane of the vane (6).

8. A system according to claim 6 or claim 7, wherein at least one flow straightening member (8) is provided upstream of the shield member (4) and at least one flow straightening member (10) is provided downstream of the shield member (4).

9. A system according to claim 6 or claim 7, wherein a pair of flow straightening members (8) is provided upstream of the shield member (4) and a pair of flow straightening members (10) is provided downstream of the shield member (4).

10. A system according to any one of the preceding claims, wherein the shield member (4) is substantially frustoconical, with the proximal end (14) being narrower than the distal end (16).

11. A method for injection of a liquid reductant into an engine exhaust system comprising: providing an exhaust pipe (18) having a bend (30) routing an exhaust flow in a curved path, the exhaust pipe (18) having an interior surface and being in fluid communication with a catalyst (22) downstream of the bend (30); providing an injector (12) mounted to the exterior of the exhaust pipe (18) and having an injector tip (28) which is disposed within the interior of the exhaust pipe (18) at the bend (30); providing a shield member (4) mounted in the exhaust pipe (18) and spaced apart from the interior surface of the exhaust pipe (18), the shield member (4) comprising a generally tubular or frustoconical structure having an open proximal end (14) and an open distal end (16), the proximal end (14) being disposed such that the injector tip (28) is inside the shield member (4), the distal end (16) being disposed at or towards a centre line (26) of the exhaust pipe (18); providing a vane (6) mounted in relation to the shield member (4), the vane (6) being arranged and adapted to direct a proportion ot exhaust flow from upstream of the bend (30) in a substantially arcuate path into the proximal end (14) of the shield member (4); and injecting a liquid reductant through the injector (12) towards the distal end 16) of the shield member (4).

## Patentansprüche

1. Motorabgasanlage, umfassend:
ein Abgasrohr (18) mit einem Bogen (30), das einen Abgasstrom auf einer gebogenen Bahn leitet, wobei das Abgasrohr (18) eine Innenfläche aufweist und mit einem Katalysator (22) stromabwärts des Bogens (30) in Fluidverbindung steht;
einen Injektor (12), der an der Außenseite des Abgasrohrs (18) montiert ist und eine Injektorspitze (28), die in dem Inneren des Abgasrohrs (18) an dem Bogen (30) angeordnet ist, zum Einspritzen von flüssigem Reduktionsmittel in das Abgasrohr (18) aufweist;
ein Abschirmelement (4), das in dem Abgasrohr (18) montiert und von der Innenfläche des Abgasrohrs (18) beabstandet ist, wobei das Abschirmelement (4) eine im Allgemeinen rohrförmige oder kegelstumpfförmige Struktur mit einem offenen proximalen Ende (14) und einem offenen distalen Ende (16) aufweist; und
eine Schaufel (6), die bezüglich des Abschirmelements (4) montiert ist, wobei die Schaufel (6) angeordnet und ausgelegt ist, um einen Teil eines Abgasstroms (24) von stromaufwärts des Bogens (30) auf einer im Wesentlichen bogenförmigen Bahn in das proximale Ende (14) des Abschirmelements (4) zu leiten,
**dadurch gekennzeichnet, dass**
das proximale Ende (14) so angeordnet ist, dass sich die Injektorspitze (28) in dem Abschirmelement (4) befindet,
wobei das distale Ende (16) an oder hin zu einer Mittellinie (26) des Abgasrohrs (18) angeordnet ist.

2. Anlage nach Anspruch 1, wobei die Schaufel (6) einen Teil des Abgasstroms durch den Raum zwischen dem proximalen Ende (14) des Abschirmelements (4) und der Innenfläche des Abgasrohrs (18) benachbart zu dem Injektor (12) und durch den Raum (32) zwischen dem Abschirmelement (4) und einer benachbarten Innenfläche des Abgasrohrs (18) an einer stromabwärts befindlichen Seite des Abschirmelements (4) leitet.

3. Anlage nach Anspruch 1 oder 2, wobei die Schaufel (6) angeordnet und ausgelegt ist, um 10-30% des Volumens des Abgasstroms durch das Abschirmelement (4) und/oder den Raum (32) zwischen dem Abschirmelement (4) und der benachbarten Innenfläche des Abgasrohrs (18) an einer stromabwärts befindlichen Seite des Abschirmelements (4) zu leiten.

4. Anlage nach Anspruch 3, wobei die Schaufel (6) angeordnet und ausgelegt ist, um 15% des Volumens zu leiten.

5. Anlage nach einem der vorhergehenden Ansprüche, wobei das Abschirmelement (4) so angeordnet ist, dass an im Wesentlichen der Mittellinie (26) des Abgasrohrs (18) Tropfen von Reduktionsmittelflüssigkeit mit einer Fortbewegungsrichtung im Wesentlichen entlang der Mittellinie (26) aus dem distalen Ende (16) austreten.

6. Anlage nach einem der vorhergehenden Ansprüche, welche weiterhin mindestens ein Strömungsgleichrichterelement (8, 10), das bezüglich des Abschirmelements (4) montiert ist, zum Reduzieren von Verwirbelung des Abgasstroms von stromaufwärts des Abschirmelements (4) umfasst.

7. Anlage nach Anspruch 6, wobei das mindestens eine Strömungsgleichrichterelement (8, 10) eine Wand oder Platte ist, die an der Schaufel (6) montiert und im Wesentlichen senkrecht zu einer lokalen Ebene der Schaufel (6) angeordnet ist.

8. Anlage nach Anspruch 6 oder 7, wobei mindestens ein Strömungsgleichrichterelement (8) stromaufwärts des Abschirmelements (4) vorgesehen ist und mindestens ein Strömungsgleichrichterelement (10) stromabwärts des Abschirmelements (4) vorgesehen ist.

9. Anlage nach Anspruch 6 oder 7, wobei ein Paar von Strömungsgleichrichterelementen (8) stromaufwärts des Abschirmelements (4) vorgesehen ist und ein Paar von Strömungsgleichrichterelementen (10) stromabwärts des Abschirmelements (4) vorgesehen ist.

10. Anlage nach einem der vorhergehenden Ansprüche, wobei das Abschirmelement (4) im Wesentlichen kegelstumpfförmig ist, wobei das proximale Ende (14) schmäler als das distale Ende (16) ist.

11. Verfahren zum Einspritzen eines flüssigen Reduktionsmittels in eine Motorabgasanlage, umfassend: Vorsehen eines Abgasrohrs (18) mit einem Bogen (30), das einen Abgasstrom auf einer gebogenen Bahn leitet, wobei das Abgasrohr (18) eine Innenfläche aufweist und mit einem Katalysator (22) stromabwärts des Bogens (30) in Fluidverbindung steht; Vorsehen eines Injektors (12), der an der Außenseite des Abgasrohrs (18) montiert ist und eine Injektorspitze (28), die in dem Inneren des Abgasrohrs (18) an dem Bogen (30) angeordnet ist, aufweist; Vorsehen eines Abschirmelements (4), das in dem Abgasrohr (18) montiert und von der Innenfläche des Abgasrohrs (18) beabstandet ist, wobei das Abschirmelement (4) eine im Allgemeinen rohrförmige oder kegelstumpfförmige Struktur mit einem offenen proximalen Ende (14) und einem offenen distalen Ende (16) aufweist, wobei das proximale Ende (14) so angeordnet ist, dass sich die Injektorspitze (28) in dem Abschirmelement (4) befindet, wobei das distale Ende (16) an oder hin zu einer Mittellinie (26) des Abgasrohrs (18) angeordnet ist; Vorsehen einer Schaufel (6), die bezüglich des Abschirmelements (4) montiert ist, wobei die Schaufel (6) angeordnet und ausgelegt ist, um einen Teil eines Abgasstroms von stromaufwärts des Bogens (30) auf einer im Wesentlichen bogenförmigen Bahn in das proximale Ende (14) des Abschirmelements (4) zu leiten; und Einspritzen eines flüssigen Reduktionsmittels durch den Injektor (12) hin zu dem distalen Ende (16) des Abschirmelements (4).

## Revendications

1. Système d'échappement de moteur comprenant :
un tuyau d'échappement (18) comportant un coude (30) conduisant un flux d'échappement dans une trajectoire courbe, le tuyau d'échappement (18) comportant une surface intérieure et étant en communication fluidique avec un catalyseur (22) en aval du coude (30) ;
un injecteur (12) monté sur l'extérieur du tuyau d'échappement (18) et comportant une pointe d'injecteur (28) qui est disposée à l'intérieur du tuyau d'échappement (18) au niveau du coude (30), pour injecter de l'agent réducteur liquide dans le tuyau d'échappement (18) ;
un élément d'écran (4) monté dans le tuyau d'échappement (18) et espacé de la surface intérieure du tuyau d'échappement (18), l'élément d'écran (4) comprenant une structure globalement tubulaire ou tronconique comportant une extrémité proximale (14) ouverte et une extrémité distale (16) ouverte ; et
une ailette (6) montée par rapport à l'élément d'écran (4), l'ailette (6) étant agencée et adaptée pour diriger une proportion de flux d'échappement (24) de l'amont du coude (30) à l'extrémité proximale (14) de l'élément d'écran (4) dans une trajectoire sensiblement arquée,
**caractérisé en ce que**
l'extrémité proximale (14) est disposée de sorte que la pointe d'injecteur (28) est à l'intérieur de l'élément d'écran (4),
l'extrémité distale (16) étant disposée sur ou vers une ligne centrale (26) du tuyau d'échappement (18).

2. Système selon la revendication 1, dans lequel l'ailette (6) dirige une partie du flux d'échappement à travers l'espace entre l'extrémité proximale (14) de l'élément d'écran (4) et la surface intérieure du tuyau d'échappement (18) adjacente à l'injecteur (12), et à travers l'espace (32) entre l'élément d'écran (4) et une surface intérieure adjacente du tuyau d'échappement (18) d'un côté aval de l'élément d'écran (4).

3. Système selon la revendication 1 ou la revendication 2, dans lequel l'ailette (6) est agencée et adaptée pour diriger 10 à 30 % du volume de flux d'échappement à travers l'élément d'écran (4) et/ou l'espace (32) entre l'élément d'écran (4) et la surface intérieure adjacente du tuyau d'échappement (18) d'un côté aval de l'élément d'écran (4).

4. Système selon la revendication 3, dans lequel l'ailette (6) est agencée et adaptée pour diriger 15 % dudit volume.

5. Système selon l'une quelconque des revendications précédentes, dans lequel l'élément d'écran (4) est disposé de sorte que des gouttelettes de liquide agent réducteur sortiront de l'extrémité distale (16) sur sensiblement la ligne centrale (26) du tuyau d'échappement (18) présentant une direction de déplacement sensiblement le long de ladite ligne centrale (26).

6. Système selon l'une quelconque des revendications précédentes, comprenant en outre au moins un élément de stabilisation de flux (8, 10) monté par rapport à l'élément d'écran (4), pour réduire les tourbillons dans le flux d'échappement provenant de l'amont de l'élément d'écran (4).

7. Système selon la revendication 6, dans lequel ledit au moins un élément de stabilisation de flux (8, 10) est une paroi ou une plaque montée sur l'ailette (6) et disposée sensiblement perpendiculairement à un plan local de l'ailette (6).

8. Système selon la revendication 6 ou la revendication 7, dans lequel au moins un élément de stabilisation de flux (8) est prévu en amont de l'élément d'écran (4) et au moins un élément de stabilisation de flux (10) est prévu en aval de l'élément d'écran (4).

9. Système selon la revendication 6 ou la revendication 7, dans lequel une paire d'éléments de stabilisation de flux (8) est prévue en amont de l'élément d'écran (4) et une paire d'éléments de stabilisation de flux (10) est prévue en aval de l'élément d'écran (4).

10. Système selon l'une quelconque des revendications précédentes, dans lequel l'élément d'écran (4) est sensiblement tronconique, l'extrémité proximale (14) étant plus étroite que l'extrémité distale (16).

11. Procédé d'injection d'un agent réducteur liquide dans un système d'échappement de moteur comprenant : la mise à disposition d'un tuyau d'échappement (18) comportant un coude (30) conduisant un flux d'échappement dans une trajectoire courbe, le tuyau d'échappement (18) comportant une surface intérieure et étant en communication fluidique avec un catalyseur (22) en aval du coude (30) ; la mise à disposition d'un injecteur (12) monté sur l'extérieur du tuyau d'échappement (18) et comportant une pointe d'injecteur (28) qui est disposée à l'intérieur du tuyau d'échappement (18) au niveau du coude (30) ; la mise à disposition d'un élément d'écran (4) monté dans le tuyau d'échappement (18) et espacé de la surface intérieure du tuyau d'échappement (18), l'élément d'écran (4) comprenant une structure globalement tubulaire ou tronconique comportant une extrémité proximale (14) ouverte et une extrémité distale (16) ouverte, l'extrémité proximale (14) étant disposée de sorte que la pointe d'injecteur (28) est à l'intérieur de l'élément d'écran (4), l'extrémité distale (16) étant disposée sur ou vers une ligne centrale (26) du tuyau d'échappement (18) ; la mise à disposition d'une ailette (6) montée par rapport à l'élément d'écran (4), l'ailette (6) étant agencée et adaptée pour diriger une proportion de flux d'échappement de l'amont du coude (30) à l'extrémité proximale (14) de l'élément d'écran (4) dans une trajectoire sensiblement arquée ; et l'injection d'un agent réducteur liquide à travers l'injecteur (12) vers l'extrémité distale (16) de l'élément d'écran (4).
